# EUROPÄISCHE PATENTSCHRIFT

(11) **EP 0 743 229 B1**
(45) Veröffentlichungstag und Bekanntmachung des Hinweises auf die Patenterteilung: **04.08.1999**
(21) Anmeldenummer: 96106905.1
(22) Anmeldetag: 02.05.1996
(51) Int. Cl.: B60R 21/20

(54) **Gassack-Abdeckung für ein Fahrzeuginsassen-Rückhaltesystem**
Air bag cover for a vehicle occupant restraint system
Couvercle de sac gonflable pour un système de retenue d'un occupant de véhicule

(30) Priorität: 16.05.1995 DE 29508063 U
(43) Veröffentlichungstag der Anmeldung: 20.11.1996
(73) Patentinhaber: TRW Occupant Restraint Systems GmbH & Co. KG, 73551 Alfdorf (DE)
(72) Erfinder: Fischer, Anton, 73572 Heuchlingen (DE)
(74) Vertreter: Degwert, Hartmut, Dipl.-Phys.

(56) Entgegenhaltungen:
- DE-A- 4 233 749
- FR-A- 2 649 945

## Beschreibung

Die Erfindung betrifft eine Gassack-Abdeckung für ein Fahrzeuginsassen-Rückhaltesystem, und insbesondere die Befestigung einer solchen Abdeckung an der Instrumententafel auf der Beifahrerseite eines Kraftfahrzeuges.

Gassack-Abdeckungen für Fahrzeuginsassen-Rückhaltesysteme sind üblicherweise über ein textiles Band bzw. mehrere textile Bänder frei beweglich mit der Instrumententafel eines Kraftfahrzeugs verbunden. Die Abdeckung ist so in allen Raumrichtungen justierbar und ihre endgültige Position wird erst durch die Geometrie des Instrumententafeldurchbruchs bestimmt. Die in die Abdeckung eingeschäumten oder eingespritzten bzw. an die Abdeckung angenähten Bänder übernehmen die Befestigung der Abdeckung erst beim durch das Entfalten des Gassacks verursachten Öffnen der Abdeckung. Die Bänder absorbieren dabei die kinetische Energie der abgesprengten Abdeckung.

Die Herstellung von Abdeckungen mit separaten Bändern ist kostenintensiv. Außerdem ist die Verbindung der textilen Bänder mit dem Kunststoffmaterial der Abdeckung nicht frei von Sicherheitsrisiken.

Der Erfindung liegt die Aufgabe zugrunde, diese Nachteile zu vermeiden.

Gemäß der Erfindung wird daher eine Gassack-Abdeckung für ein Fahrzeuginsassen-Rückhaltesystem bereitgestellt, die eine in die Instrumententafel eingebaute Deckelplatte aufweist, dadurch gekennzeichnet, daß an der der Instrumententafel zugewandten Seite der Deckelplatte wenigstens eine bandförmige Lasche angeformt ist, die durch einen im Inneren der Instrumententafel befestigten Haltebügel geführt und an ihrem der Deckelplatte entgegengesetzten Ende so verbreitert ist, daß dieses Ende den Haltebügel nicht passieren kann.

In vorteilhafter Weise sind auf der bandförmigen Lasche mehrere in Querrichtung verlaufende, noppen- oder rippenförmig ausgebildete Halteelemente angeordnet, die an den Haltebügel angreifen. Auf diese Weise wird die Reibungskraft erhöht, die das Band zum Durchschlüpfen des Haltebügels benötigt, und beim Absprengen der Abdeckung zusätzlich kinetische Energie abgebaut.

Die Erfindung wird nun unter Bezugnahme auf die Zeichnung näher beschrieben. In der Zeichnung zeigen:
- Fig. 1: die schematische Darstellung einer Abdeckung auf der Beifahrerseite;
- Fig. 2: eine schematische Ansicht einer geöffneten Abdeckung;
und
- Fig. 3: eine schematische Darstellung der Befestigung der Abdeckung.

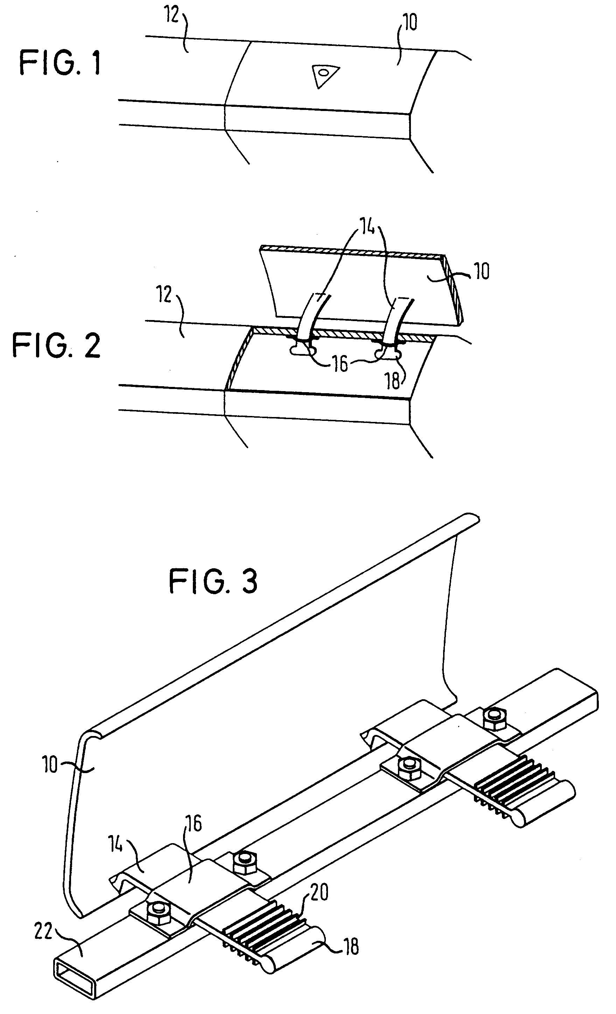

Fig. 1 zeigt beispielhalber eine Gassack-Abdeckung für ein Fahrzeuginsassen-Rückhaltesystem auf der Beifahrerseite eines Kraftfahrzeuges mit einer in die Instrumententafel 12 eingebauten Abdeckung. Bei einer Entfaltung des im Inneren der Instrumententafel angeordneten Gassacks wird die Deckelplatte 10 der Abdeckung abgesprengt.

Fig. 2 zeigt schematisch die Gassack-Abdeckung im geöffneten Zustand. An die im eingebauten Zustand dem Inneren der Instrumententafel zugewandten Seite der Deckelplatte 10 ist wenigstens eine bandartige Lasche 14 angeformt bzw. angespritzt, d.h. die Deckelplatte 10 bzw. ein auf deren Rückseite angebrachtes Einlegeteil und die Lasche 14 bestehen aus dem gleichen Material und sind einstückig, beispielsweise durch Spritzgießen, geformt. Die Lasche 14 ist durch einen im Inneren der Instrumententafel befestigten Haltebügel 16 geführt und an ihrem der Deckelplatte 10 entgegengesetzten freien Ende verbreitert. Dieses Ende bildet einen Stopper 18 aus, der den Haltebügel 16 nicht passieren kann. Die Anzahl der bandförmigen Laschen 14 und die Form des Stoppers 18 sind beliebig.

Wie in Fig. 3 dargestellt, ist die an die Deckelplatte 10 angeformte bandförmige Lasche 14 vorzugsweise mit in Querrichtung zum Band verlaufenden Halteelementen 20 versehen. Diese Halteelemente 20 sind bevorzugt in Form von Rippen und/oder Noppen (hier nicht dargestellt) ausgebildet. Die Rippen oder Noppen greifen an dem Haltebügel 16 an und erhöhen über zusätzliche Reibungskräfte den Energieaufwand, den das Band 14 zum Durchschlüpfen des Haltebügels 16 benötigt. Der Haltebügel 16 ist bei der hier gezeigten Ausführungsform über eine Schraubverbindung an einer im Inneren der Instrumententafel angeordneten Leiste 22 befestigt. Der Stopper 18 weist bevorzugt einen im wesentlichen kreisrunden Querschnitt auf. Sein Durchmesser ist größer als die lichte Weite zwischen der Oberkante der Leiste 22 und der dieser zugewandten Fläche des Haltebügels 16, so daß der Stopper 18 den Haltebügel 16 nicht passieren kann.

Die erfindungsgemäße Abdeckung ist kostengünstig herzustellen und bietet eine erhöhte Funktionssicherheit, da zur Herstellung der Deckelplatte 10 bzw. eines entsprechenden Einlegeteils und der Laschen 14 das gleiche Kunststoffmaterial verwendet und die Bruchgefahr reduziert wird.

## Patentansprüche

1. Gassack-Abdeckung für ein Fahrzeuginsassen-Rückhaltesystem mit einer in die Instrumententafel (12) eines Fahrzeugs eingebauten Deckelplatte (10), **dadurch gekennzeichnet,** daß an der der Instrumententafel (12) zugewandten Seite der Deckelplatte wenigstens eine bandförmige Lasche (14) angeformt ist, die durch einen im Inneren der Instrumententafel befestigten Haltebügel (16) geführt und an ihrem der Deckelplatte entgegengesetzten Ende (18) so verbreitert ist, daß dieses Ende den Haltebügel nicht passieren kann.

2. Abdeckung nach Anspruch 1, **dadurch gekennzeichnet,** daß auf der bandförmigen Lasche (14) mehrere in Querrichtung verlaufende Halteelemente (20) angeordnet sind, die an dem Haltebügel (16) angreifen.

3. Abdeckung nach Anspruch 2, **dadurch gekennzeichnet,** daß die Halteelemente (20) in Form von Rippen oder Noppen ausgebildet sind.

## Claims

1. A cover for a gas bag of an occupant restraining system in vehicles comprising a covering plate (10) installed in the instrument panel (12) of a vehicle, characterized in that at least one tape-like lug (14) is molded on the side of the covering plate facing the instrument panel (12), said lug being trained under a holding yoke (16) secured in the interior of the instrument panel and at its end (18) opposite to the covering plate being so widened that this end is prevented from slipping past the holding yoke.

2. The cover as claimed in claim 1, characterized by a plurality of holding elements (20) extending athwart on the tape-like lug (14), said holding elements being adapted to abut the holding yoke (16).

3. The cover as claimed in claim 2, characterized in that the holding elements (20) are in the form of ribs or knobs.

## Revendications

1. Couvercle de sac à gaz pour un système de retenue de passager d'un véhicule avec une plaque de recouvrement (10), montée dans le tableau de bord (12) d'un véhicule,
caractérisé en ce que
sur le côté de la plaque de recouvrement, qui est tourné vers le tableau de bord (12), est formée au moins une patte (14) en forme de bande, qui passe dans un étrier de retenue (16) fixé à l'intérieur du tableau de bord et qui est élargie à son extrémité (18), opposée à la plaque de recouvrement, d'une manière telle que cette extrémité ne puisse pas passer à travers l'étrier de retenue.

2. Couvercle selon la revendication 1,
caractérisé en ce que
plusieurs éléments d'arrêt (20), qui s'étendent dans le sens transversal, sont disposés sur la patte en forme de bande (14), ces éléments venant en prise sur l'étrier de retenue (16).

3. Couvercle selon la revendication 2, caractérisé en ce que les éléments d'arrêt (20) sont constitués sous la forme de nervures ou de boutons.
